# EUROPEAN PATENT SPECIFICATION

(11) **EP 2 921 796 B1**
(45) Date of publication and mention of the grant of the patent: **08.03.2017**
(21) Application number: 15159806.7
(22) Date of filing: 19.03.2015
(51) Int. Cl.: F24H 3/00, F24H 3/06, F24D 13/04, F24D 19/00, F24F 13/06, F24F 13/08, F28D 1/02

(54) **HEATING UNIT WITH RADIATOR AND THERMOCONVECTOR**
HEIZEINHEIT MIT HEIZKÖRPER UND THERMOKONVEKTOR
UNITÉ DE CHAUFFAGE AVEC UN RADIATEUR ET THERMOCONVECTEUR

(30) Priority: 19.03.2014 IT MI20140107 U
(43) Date of publication of application: 23.09.2015
(73) Proprietor: Deltacalor S.r.L., 23801 Calolziocorte (Lecco) (IT)
(72) Inventor: Pastorino, Paolo, 20149 MILANO (IT)
(74) Representative: Cosenza, Simona

(56) References cited:
- EP-A1- 1 381 255
- EP-A1- 2 677 248
- DE-U1- 29 903 817
- DE-U1-202010 012 695
- FR-A1- 2 923 895

## Description

The present invention refers, in general, to the residential heating field and, in particular, it concerns a heating unit comprising a radiator of the hydraulic, electric or mixed type and an electric fan convector.

A heating unit of the aforementioned type is known, for example, from utility model patent No. IT243828 to the same Applicant as the present application. This prior patent describes a heating unit, specifically intended for use in bathrooms or similar environments, comprising a hot water or electric radiator, of the so-called "towel-warmer" type, and an electric resistance fan convector. The convector of this heating unit allows the temperature in a bathroom to advantageously and rapidly increase when the radiator is turned off or is still in the turning on step.

However, a drawback of the heating unit known from the cited prior patent is represented by the impossibility to adjust the direction of the hot air flow coming out of the convector. Hot air, indeed, is expelled from the convector in a fixed direction, substantially horizontal, through the slits of a grating arranged at a central area of the radiator that, if necessary, is devoid of pipes, in order not to obstruct the hot air flow coming out. The hot air produced by the convector can thus be diffused in the room to be heated, but it is not possible to deviate its flow either upwards or downwards. In particular, it is not possible to direct the hot air flow towards the towels hung on the radiator with the purpose of warming or drying them.

French patent No. 2923895 also teaches a heating unit comprising a radiator and a convector, in which the convector has a diffusor for hot air of the fixed type, but equipped with adjustable inclination fins. However, the permitted adjustment of the inclination of these fins is small and, in particular, it does not allow the hot air flow to be directed towards the towels hung on the radiator.

The primary purpose of the present invention is that of avoiding the aforementioned drawback.

Another purpose is also to make a heating unit with radiator and convector having a low bulk thanks to its compactness.

The aforementioned purposes are accomplished, according to the invention, by a heating unit with a radiator of the hydraulic, electric or mixed type and an electric fan convector according to the characteristics of claim 1.

In order to better understand the invention, an embodiment thereof will be described with reference to the attached drawings, in which:
- figure 1 is a front perspective view of a heating unit according to the present invention,
- figure 2 is a rear perspective view of the heating unit of figure 1,
- figure 3 is a front perspective view of a variant of the heating unit according to the present invention,
- figure 4 is a rear perspective view of the heating unit of figure 3,
- figures 5-8 are an enlarged view of the diffusor for hot air, illustrated in its different possible orientations,
- figures 9 and 10 are a front elevated view of the convector with the diffusor for hot air oriented so as to produce a horizontal and respectively vertically upwards air jet,
- figures 11 and 12 are a section view of the convector carried out along the line A of figure 9 and along the line B of figure 10, respectively, and
- figure 13 shows the control panel of the heating unit.

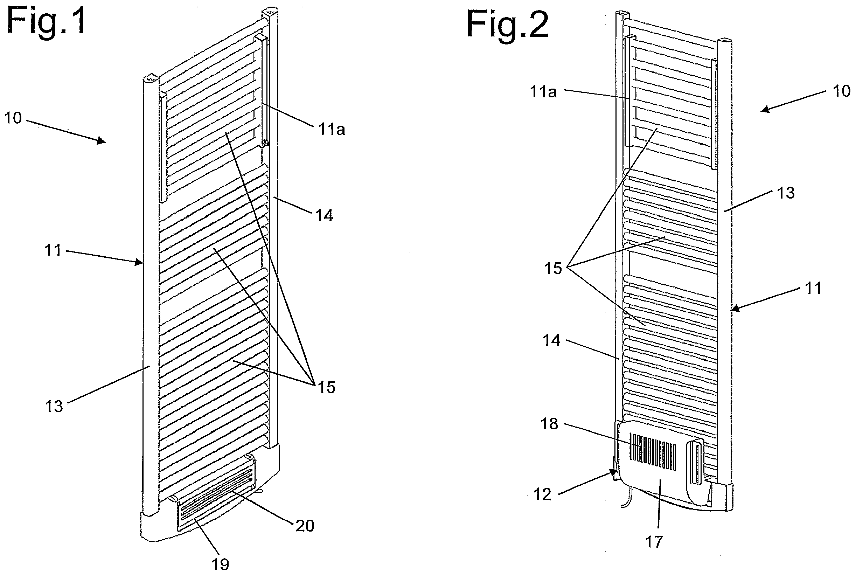

As shown in figures 1 and 2, the heating unit 10 comprises a radiator 11 and a convector 12. The radiator 11 is of the so-called "towel-warmer" type and is particularly suitable for bathrooms and other similar rooms. The radiator 11 can be of the hot water type, of the electric type or of the mixed type, as it is *per sé* known in the field, and comprises two vertical pipes 13 and 14 connected by a series of horizontal pipes 15.

The radiator 11 can include a part 11a, also bearing the pipes 15, which is mounted in a rotary manner between the vertical pipes 13 and 14 and normally is coplanar with the radiator 11, but if necessary it can be rotated outwards and positioned horizontally to form a clothes rack.

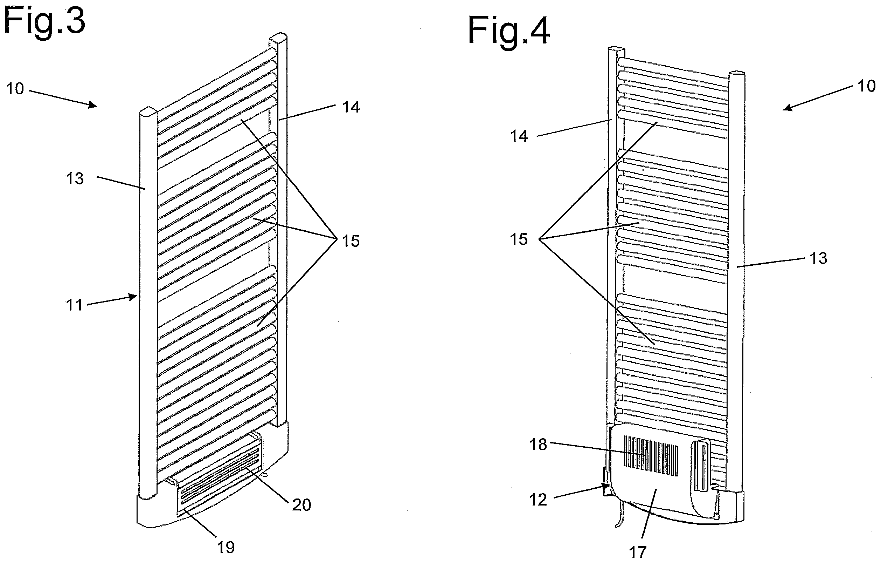

Of course, however, it is not generally necessary, according to the invention, for the radiator 11 of the heating unit 10 to be of the type described above. The invention equally applies to a radiator of the conventional type shown, for example, in figures 3 and 4.

The convector 12 of the heating unit 10 is of the electric resistance fan type. It essentially consists of a casing 17 equipped in its rear part with inlet slits 18 for inletting cold air and having in its front part an outlet opening 19 for outletting the hot air produced by the convector.

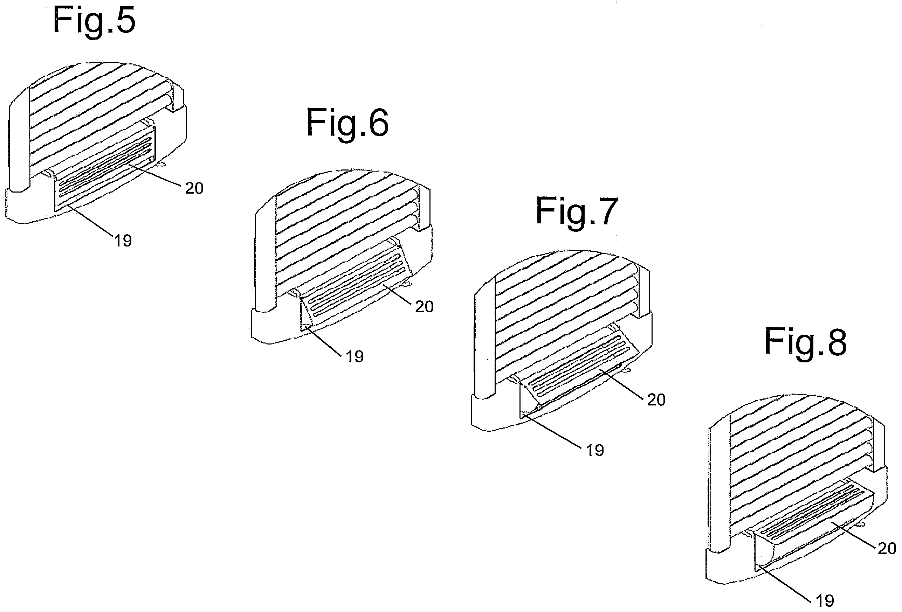

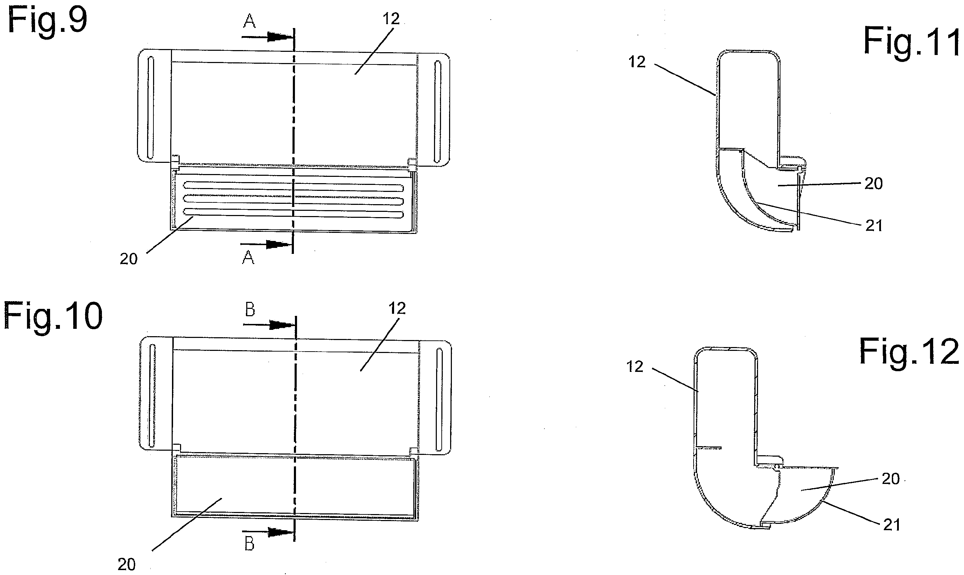

The outlet opening 19 includes a diffusor 20 of the orientable type, illustrated in greater detail in figures 5 to 12. This diffusor 20 has a curved surface 21 suitable for deviating the hot air flow produced by the convector 12. The diffusor 20 is mounted in a rotary manner about a rotation axis arranged at an upper edge of the outlet opening for outletting hot air. The diffusor 20 can thus be rotated between a first operative position (figure 11), in which the hot air flow is deviated in a substantially horizontal direction, and a second operative position (figure 12), in which the hot air flow is deviated in a substantially vertical direction upwards.

The angle of orientation of the diffusor 20 is comprised between 0 and 90 degrees, but a wider angular range can also be provided. Of course, the diffusor 20 can also take up any intermediate angular orientation between 0 and 90 degrees. When the diffusor 20 is oriented in the configuration shown in figure 11, the hot air jet produced by the convector is directed horizontally, whereas in the configuration shown in figure 12, the air jet is directed vertically upwards, so as to reach the towels hung on the radiator.

The diffusor 20 is equipped with a screen provided with slit openings for the outlet of hot air. Of course, it is not generally essential for the diffusor 20 to be provided with slit openings for the outlet of hot air, since such openings can have another shape suitable for the function, for example they can be of the circular or grating holes type, provided that the diffusor be orientable, so as to be able to direct the air flow coming out towards the clothes hung on the radiator or towards another desired direction.

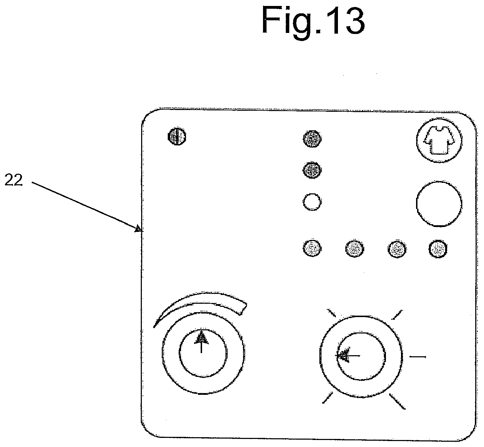

The operation of the convector 12 is advantageously adjusted and controlled by the user through a control device 22 of the programmable type, schematically shown in figure 13. Advantageously, the device 22 can include controls for adjusting the power of the air heater and the speed of the fan, as well as a timer for automatically switching off the convector. The device 22 can also include a control for increasing the hot air flow to the maximum in case quick drying be required.

The casing 17 of the convector 12 can be made of a suitable metallic or plastic material. Advantageously, the radiator 11 can be made of aluminium or steel.

Preferably, the heating unit 10 will be provided to the user in the assembled form, even if nothing prevents the convector 12 from being sold separately and mounted on a suitable pre-existing radiator.

## Claims

1. Heating unit (10) with a radiator (11) of the hydraulic, electric or mixed type and an electric fan convector (12), wherein said convector (12) is equipped with an inlet opening (18) for inletting cold air and an outlet opening (19) for outletting hot air, and wherein said outlet opening (19) for outletting hot air includes an orientable diffusor (20), **characterised in that** said diffusor (20) has a deviation surface (21) for deviating the airflow having a curved shape and is mounted in a rotary manner about a rotation axis arranged at an upper edge of said outlet opening (19) for outletting hot air, between a first operative position, in which the hot air flow is deviated by said diffusor (20) in a substantially horizontal direction, and a second operative position, in which the hot air flow is deviated by said diffusor (20) in a substantially vertical direction upwards.

2. Heating unit according to claim 1, **characterised in that** said diffusor (20) is equipped with a screen equipped with outlet openings for outletting hot air.

3. Heating unit according to claim 1, **characterised in that** said heating unit (10) is intended for bathrooms or similar environments and **in that** the radiator (11) is of the "towel-warmer" type.

4. Heating unit according to claim 1, **characterised in that** the convector (12) has a control device (22) comprising a programming device.

5. Heating unit according to claim 4, **characterised in that** the control device (22) includes a control for increasing the hot air flow to the maximum in case the towels need to be dried quickly.

## Patentansprüche

1. Heizeinheit (10) mit einem Heizkörper (11) hydraulischen, elektrischen oder gemischten Typs und einem elektrischen Gebläsekonvektor (12), wobei der Konvektor (12) mit einer Eintrittsöffnung (18) für den Einlass von Kaltluft und mit einer Austrittsöffnung (19) für den Auslass von Warmluft versehen ist, und wobei die Austrittsöffnung (19) für den Auslass von Warmluft einen ausrichtbaren Diffusor (20) umfasst, **dadurch gekennzeichnet, dass** der Diffusor (20) eine Umlenkfläche (21) zum Umlenken des Luftstroms mit gekrümmter Form aufweist und um eine Drehachse drehbar eingebaut ist, die am oberen Rand der Austrittsöffnung (19) zum Auslass der Warmluft angeordnet ist, zwischen einer ersten Arbeitsstellung, in der der Warmluftstrom durch den Diffusor (20) in eine im Wesentlichen horizontale Richtung umgelenkt wird, und einer zweiten Arbeitsstellung, in der der Warmluftstrom durch den Diffusor (20) in eine im Wesentlichen vertikale Richtung nach oben umgelenkt wird.

2. Heizeinheit nach Anspruch 1, **dadurch gekennzeichnet, dass** der Diffusor (20) mit einem Schirm ausgestattet ist, der mit Austrittsöffnungen für den Auslass von Warmluft ausgestattet ist.

3. Heizeinheit nach Anspruch 1, **dadurch gekennzeichnet, dass** die Heizeinheit (10) für Badezimmer oder ähnliche Räume bestimmt ist und dass der Heizkörper (11) vom Typ "Handtuchwärmer" ist.

4. Heizeinheit nach Anspruch 1, **dadurch gekennzeichnet, dass** der Konvektor (12) eine Steuereinrichtung (22) aufweist, die ein Programmiergerät umfasst.

5. Heizeinheit nach Anspruch 4, **dadurch gekennzeichnet, dass** die Steuereinrichtung (22) eine Steuerung zum Erhöhen des Warmluftstroms auf Höchststufe beinhaltet, wenn die Handtücher schnell getrocknet werden sollen.

## Revendications

1. Unité de chauffage (10) avec un radiateur (11) du type hydraulique, électrique ou mixte et un convecteur à ventilateur électrique (12), dans laquelle ledit convecteur (12) est équipé d'une ouverture d'entrée (18) pour recevoir en entrée de l'air froid et une ouverture de sortie (19) pour délivrer en sortie de l'air chaud, et dans laquelle ladite ouverture de sortie (19) pour délivrer en sortie de l'air chaud comprend un diffuseur orientable (20), **caractérisée en ce que** ledit diffuseur (20) comporte une surface de déviation (21) pour dévier le flux d'air ayant une forme incurvée et est monté d'une manière rotative autour d'un axe de rotation agencé au niveau d'un bord supérieur de ladite ouverture de sortie (19) pour délivrer en sortie de l'air chaud, entre une première position fonctionnelle, dans laquelle le flux d'air chaud est dévié par ledit diffuseur (20) dans une direction sensiblement horizontale, et une deuxième position fonctionnelle, dans laquelle le flux d'air chaud est dévié par ledit diffuseur (20) dans une direction sensiblement verticale vers le haut.

2. Unité de chauffage selon la revendication 1, **caractérisée en ce que** ledit diffuseur (20) est équipé d'un écran muni d'ouvertures de sortie pour délivrer en sortie de l'air chaud.

3. Unité de chauffage selon la revendication 1, **caractérisée en ce que** ladite unité de chauffage (10) est destinée à des salles de bain ou des environnements similaires et **en ce que** le radiateur (11) est du type « sèche-serviettes ».

4. Unité de chauffage selon la revendication 1, **caractérisée en ce que** le convecteur (12) comporte un dispositif de commande (22) comprenant un dispositif de programmation.

5. Unité de chauffage selon la revendication 4, **caractérisée en ce que** le dispositif de commande (22) comprend une commande pour augmenter le flux d'air chaud au maximum dans le cas où des serviettes doivent être séchées rapidement.
